**Europäisches Patentamt**

**European Patent Office**

**Office européen des brevets**

(11) Numéro de publication : **0 086 684**
**B1**

(12) **FASCICULE DE BREVET EUROPÉEN**

(45) Date de publication du fascicule du brevet :
26.03.86

(51) Int. Cl.⁴ : **B 01 J  8/12, C 10 G  49/14**

(21) Numéro de dépôt : **83400112.5**

(22) Date de dépôt : **17.01.83**

(54) **Procédé et dispositif pour soutirer des particules solides et introduire une charge liquide à la partie inférieure d'une zone de contact.**

(30) Priorité : **02.02.82 FR 8201765**

(43) Date de publication de la demande :
**24.08.83 Bulletin 83/34**

(45) Mention de la délivrance du brevet :
**26.03.86 Bulletin 86/13**

(84) Etats contractants désignés :
**BE DE GB IT NL**

(56) Documents cités :
**EP-A- 0 064 459**
**FR-A- 2 173 040**
**FR-A- 2 257 323**
**GB-A- 2 055 607**
**NL-C-    79 876**
**US-A- 2 432 962**
**US-A- 2 846 369**
**US-A- 2 846 370**

(73) Titulaire : **INSTITUT FRANCAIS DU PETROLE**
**4, Avenue de Bois-Préau**
**F-92502 Rueil-Malmaison (FR)**

(72) Inventeur : **Euzen, Jean-Paul**
**45, chemin Bachely**
**F-69570 Dardilly (FR)**
Inventeur : **Jacquin, Yves**
**36, rue des Fontaines**
**F-92310 Sèvres (FR)**

Jouve, 18, rue St-Denis, 75001 Paris, France

## Description

La présente invention concerne un procédé et des dispositifs de traitement catalytique d'une charge fluide et plus particulièrement de conversion ou d'hydroconversion d'hydrocarbures.

L'invention est notamment applicable aux traitements catalytiques de charges liquides, telles que, par exemple, des bruts pétroliers lourds, des résidus de la distillation d'hydrocarbures sous vide, ces traitements étant effectués généralement en présence d'hydrogène et/ou de mélanges gazeux riches en hydrogène, sur un lit de catalyseur solide, le catalyseur étant utilisé sous forme de particules (catalyseur extrudé, grains de formes diverses, billes etc...).

Lors de tels traitements catalytiques, on constate une désactivation souvent rapide du catalyseur, due à la présence de poisons catalytiques, à la formation de coke, au dépôt de certains métaux... etc...

Cette désactivation nécessite le remplacement fréquent de tout ou partie du lit catalytique.

Conformément à l'invention, le soutirage du catalyseur hors du réacteur est effectué progressivement. Le terme « progressivement » signifie que le catalyseur peut être soutiré :

soit périodiquement, par exemple avec une fréquence de 1/10 à 10 jours, en ne soutirant à la fois qu'une fraction, par exemple 0,5 à 15 % de la quantité totale de catalyseur. On peut, selon les besoins, soutirer davantage de catalyseur et par exemple soutirer jusqu'à 100 % de la quantité totale de catalyseur, c'est-à-dire la totalité du catalyseur. La fréquence de soutirage du catalyseur peut être beaucoup plus rapide, (de l'ordre de la minute ou de la seconde par exemple), la quantité soutirée étant réduite en proportion ; entre les périodes de soutirage, le réacteur fonctionne donc en lit fixe ;

soit en continu ; dans ce cas, le réacteur est du type à lit mobile.

Le catalyseur frais est introduit à la partie supérieure du réacteur et le procédé et les dispositifs pour réaliser l'évacuation de catalyseur usé à la partie inférieure du réacteur à travers un entonnoir de soutirage, font l'objet de la présente invention.

Le procédé selon l'invention et les dispositifs selon l'invention conviennent également pour le soutirage de particules catalytiques de réacteurs de craquage, d'hydrocraquage, d'hydroréformage, de fabrication d'hydrocarbures aromatiques, d'isomérisation d'hydrocarbures paraffiniques, naphténiques ou aromatiques, les réactions diverses d'hydrogénation, de déshydrogénation, d'alkylation, de transalkylation, d'hydrodécyclisation, d'hydrodéalkylation etc... réacteurs où la charge et/ou les gaz qui y sont injectés, cheminent de bas en haut. Le dispositif et le procédé selon l'invention conviennent encore pour toutes enceintes où sont manipulés des liquides et/ou des gaz ainsi que des particules solides, en grains quelles que soient leurs tailles, à condition qu'elles puissent descendre sous l'effet de la pesanteur ou d'une fuite de gaz contrôlée entraînant ces particules. On pourrait ainsi citer, à titre non limitatif, les graviers, les sables, les dragées, les grains, les granulés, les comprimés, les pastilles de toutes sortes utilisées en pharmacie, en confiserie, en alimentation, etc...

De préférence, la charge fluide est introduite dans le réacteur ou l'enceinte renfermant des particules par des organes de distribution situés à la partie inférieure du réacteur ou de l'enceinte et circule à contre-courant du catalyseur ou des particules avant d'être évacuée, après traitement, à la partie supérieure du réacteur (ou de l'enceinte que l'on désigne arbitrairement « réacteur » dans la suite de la présente description).

L'écoulement du catalyseur, ou des particules, par gravité, assure une descente régulière du lit catalytique ou du lit de particules (particules que l'on désigne arbitrairement « catalyseur » dans la suite de la description), tandis que la circulation ascendante de la charge fluide permet en particulier un réglage facile du temps de séjour et assure une phase fluide continue.

Par ailleurs la circulation à contre-courant de la charge et du catalyseur permet d'obtenir une conversion catalytique poussée puisque le catalyseur frais introduit au sommet du réacteur traite une charge presque convertie (c'est-à-dire contenant essentiellement des composés dont la transformation est difficile), tandis qu'au fond du réacteur le catalyseur usé traite une charge fraîche (c'est-à-dire riche en composés faciles à transformer), ce qui réalise efficacement les premières étapes de la conversion. Il en résulte une utilisation systématique du catalyseur dans le réacteur, un profil thermique du lit catalytique plus régulier que dans une circulation du type co-courant, avec, en particulier, au bas du réacteur, une température plus modérée réduisant les risques de cokéfaction du catalyseur.

Dans le brevet néerlandais n° 79876, où existe un contre-courant entre le catalyseur et la charge, cette charge est introduite sous la grille qui soutient le lit catalytique, donc sous une paroi discontinue. On verra que la paroi soutenant le catalyseur dans le présent procédé est continue.

On connaît par le brevet US 3,826,737 un procédé de conversion catalytique en lit mobile. Ce procédé est cependant plus particulièrement adapté à la circulation co-courant du catalyseur et de la charge liquide, cette dernière étant évacuée à la base du réacteur à travers une grille cylindrique disposée à la base du cône de décharge du catalyseur.

Un tel procédé présente l'inconvénient d'un risque d'encrassement de la grille par des grains de catalyseur poussés contre cette grille par la charge liquide évacuée par le fond du réacteur. Il peut alors en résulter une répartition irrégulière des fluides dans le catalyseur, des difficultés d'écoulement du lit catalytique, avec des risques de blocage de certaines zones de ce lit, ainsi qu'un accroissement de l'érosion du catalyseur dû au frottement entre grains bloqués et grains libres du lit catalytique et entre les grains de catalyseur libres et la grille d'évacuation de la charge liquide.

L'objet de l'invention est de fournir une technique qui supprime les inconvénients mentionnés ci-dessus.

Ce résultat est obtenu par un procédé pour soutirer des particules solides de catalyseur d'une zone de réaction généralement fermée et pour introduire dans ladite zone une charge fluide constituée d'au moins un liquide et d'un gaz riche en hydrogène, ladite zone généralement fermée ayant sensiblement la forme d'un cylindre allongé et sensiblement vertical, les particules de catalyseur étant introduites à la partie supérieure de la zone de réaction et soutirées progressivement dans la partie inférieure de la zone de réaction après avoir cheminé de haut en bas dans ladite zone, tandis que la charge fluide est introduite au moins en partie dans la partie inférieure de ladite zone et en est soutirée dans la partie supérieure après avoir cheminé de bas en haut dans ladite zone, procédé dans lequel les particules solides de catalyseur sont soutirées par l'extrémité inférieure d'au moins une zone évasée ayant la forme d'un cône renversé ou d'une pyramide renversée, c'est-à-dire d'un cône ou d'une pyramide dont le sommet est tourné vers le bas, sommet dans lequel est percée au moins une ouverture de taille nécessaire pour l'évacuation des particules de catalyseur, la surface des parois de ladite zone évasée étant sensiblement continue (c'est-à-dire sans aspérités et sans ouvertures telles que fentes ou perforations), le procédé étant caractérisé en ce qu'une partie au moins de la charge fluide est injectée dans la partie inférieure de ladite zone de réaction par au moins une conduite principale généralement sensiblement horizontale et qui ensuite se subdivise :

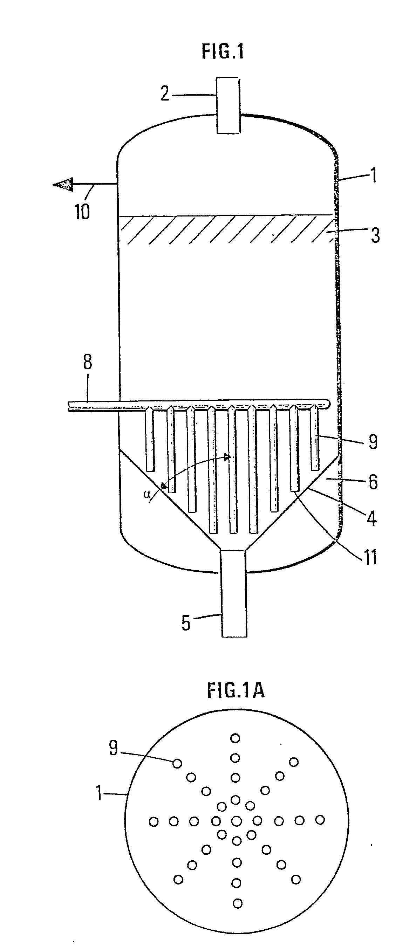

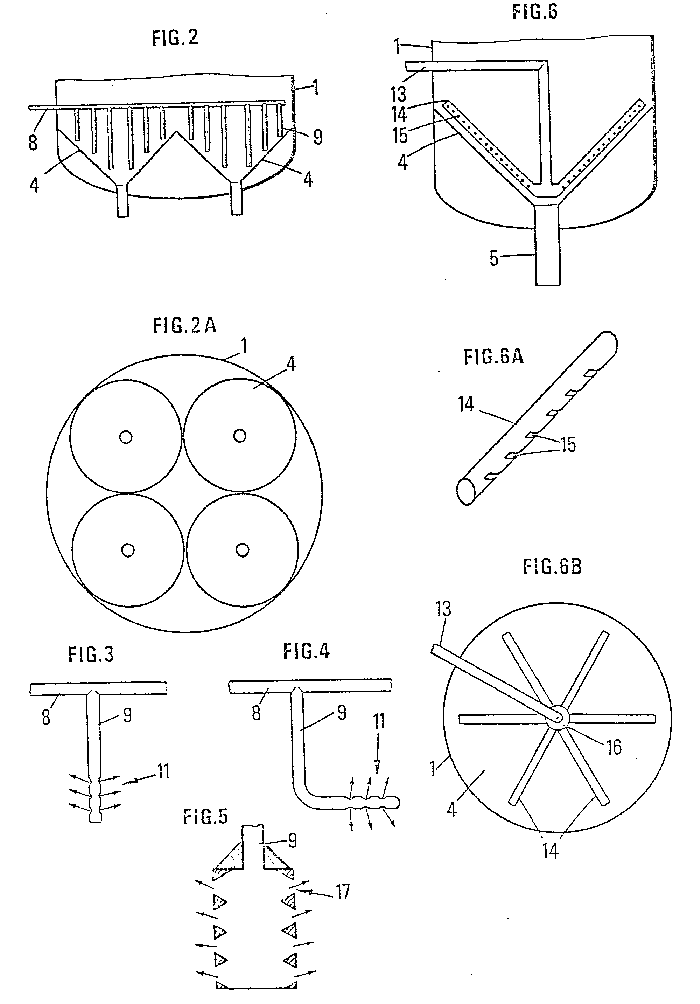

soit en plusieurs conduites disposées sensiblement verticalement (voir figure 1) à l'intérieur de la zone de réaction et aux extrémités inférieures desquelles est aménagé au moins un orifice par conduite,

soit en une tubulure par enceinte évasée (voir figure 6), ladite tubulure étant disposée sensiblement verticalement selon l'axe de chaque cône ou de chaque pyramide et se subdivisant au voisinage du sommet dudit cône ou de ladite pyramide en une pluralité de conduites sensiblement parallèles aux génératrices du cône ou aux parois de la pyramide et le long desquelles conduites sont disposés des orifices,

les orifices définis ci-dessus étant situés au-dessus desdites parois à une distance desdites parois au moins égale à la taille moyenne d'une particule solide et au plus égale à environ 500 fois la taille moyenne d'une particule solide, distance, de préférence comprise entre 4 et 50 fois la taille moyenne d'une particule solide de catalyseur et généralement inférieure à 10 cm, par exemple de l'ordre de 5 cm.

L'invention est illustrée par diverses figures :

Les figures I et IA montrent en coupe axiale et en section droite respectivement, un dispositif selon l'invention, avec un seul entonnoir de soutirage du catalyseur.

Les figures 2 et 2A représentent un autre mode de réalisation, en coupe axiale et en section droite respectivement, avec plusieurs entonnoirs de soutirage du catalyseur.

Les figures 3 à 6, 6A et 6B illustrent différents modes de réalisation des moyens d'introduction de la charge fluide.

Les figures I et IA représentent schématiquement un premier mode de réalisation d'un dispositif de traitement catalytique, par exemple en lit mobile.

Le réacteur 1 comporte à sa partie supérieure des moyens d'introduction de catalyseur frais (neuf ou régénéré) schématisés par le conduit 2 qui déverse les particules de catalyseur pour alimenter un lit de catalyseur 3.

Le catalyseur s'écoule par gravité dans le réacteur et est évacué, par le conduit 5, à la partie inférieure 6 du réacteur 1, par l'intermédiaire d'un entonnoir de soutirage 4. Cet entonnoir, ici en forme de cône renversé, est dépourvu d'aspérités et de toute ouverture telle que des trous, des fentes ou perforations.

L'angle α que fait l'axe du cône (ou l'axe de la pyramide si l'entonnoir a cette forme) avec l'une des génératrices du cône (ou l'une des arêtes de la pyramide) est compris entre 10 et 80°, de préférence entre 30 et 40°. Au moins une partie de la charge fluide est introduite à la partie inférieure du réacteur 1 par des moyens comprenant au moins une rampe de distribution 8 qui alimente une pluralité de cannes verticales d'injection 9.

Cette charge fluide qui peut être formée d'une ou de deux phases (liquide ou/et gaz) remonte dans le réacteur à contre-courant du catalyseur avant d'être évacuée à la partie supérieure du réacteur par l'intermédiaire de moyens de collecte et d'évacuation schématisés par la conduite 10 ayant la forme par exemple d'un rateau constitué de tubes collecteurs raccordés à un conduit d'évacuation.

Les cannes (ou jambes) d'injection 9 sont réparties à l'intérieur de l'entonnoir 4 avec un écartement suffisant pour que les particules de catalyseur ne se coincent pas ou ne soient pas ralenties ou freinées entre ces cannes.

Ces conduits 9 ont des longueurs différentes (selon qu'elles se trouvent plus ou moins près des parois du réacteur ou de la partie centrale de ce réacteur ou selon le nombre des zones évasées (voir figure 2)) et débouchent à la base du lit catalytique par des orifices 11 situés à peu de distance des parois de l'entonnoir comme indiqué précédemment.

Sur la figure 1A, on distingue en coupe, la section du réacteur 1 et la section des cannes 9, débouchant au voisinage des parois de l'entonnoir.

Un dispositif avec cannes verticales d'injection de la charge a été décrit dans le brevet américain n° 2,432,962 mais ce brevet ne concerne pas l'injection de la charge dans la partie inférieure du réacteur, c'est-à-dire au voisinage immédiat de la paroi qui soutient le lit catalytique, cette paroi étant plane dans ce brevet américain, le catalyseur ensuite étant entraîné dans une zone conique extérieure à l'espace réactionnel.

Les figures 2 et 2A illustrent schématiquement un mode de réalisation dans lequel l'évacuation du catalyseur s'effectue par plusieurs entonnoirs de soutirage. On a représenté, sur ces figures 2 et 2A, uniquement le fond d'un réacteur 1 et les entonnoirs tels que 4 et sur la figure 2, les cannes 9 et la rampe 8. La figure en coupe 2A montre ainsi 4 entonnoirs, deux d'entre eux seulement étant visibles sur la figure 2 en coupe axiale.

Le nombre des entonnoirs de soutirage 4 dépend de la géométrie du réacteur, des contraintes mécaniques de construction et de l'uniformité des trajets souhaitée pour les particules catalytiques qui traversent les divers secteurs du réacteur.

Un tel mode de soutirage permet de régler facilement le débit de catalyseur, indépendamment de celui de la charge fluide et permet de réaliser à volonté un soutirage continu (lit mobile) ou discontinu du catalyseur (lit fixe).

Pour ce qui concerne les figures 1 et 2, les cannes de distribution de la charge fluide sont disposées verticalement et régulièrement réparties sur toute la section du réacteur et vont jusqu'à proximité de la paroi du ou des entonnoirs de soutirage du catalyseur.

Lorsque la charge fluide comprend plusieurs phases, celles-ci pourront être admises, soit séparément, soit mélangées dans les proportions souhaitées pour la conversion en phase mixte gaz-liquide.

Les cannes de distribution comportent à leur partie inférieure un organe d'injection d'une partie au moins de la charge fluide schématisé par le trou 11 sur la figure 1. Sur cet organe d'injection, est disposé au moins un orifice : ces organes peuvent être de différents types :

Sur la figure 3, on a représenté une rampe 8 et une canne 9 dont, ici l'organe d'injection 11 est constitué d'un embout perforé disposé verticalement ; les petites flèches indiquent le trajet du fluide au moment de son injection par lesdits orifices de l'embout.

Sur la figure 4, on a représenté une rampe 8 et une canne 9 dont ici l'organe d'injection 11 est constitué d'un embout perforé disposé horizontalement ; les petites flèches indiquent le trajet du fluide au moment de son injection par lesdits orifices de l'embout.

On peut utiliser également, dans le réacteur, à la fois des cannes à embouts horizontaux ou verticaux ou disposés selon tout autre orientation.

Selon un autre mode de réalisation (Fig. 5), les organes d'injection de la charge fluide pourront être formés par des petites buses 17, cylindriques ou crépines de diamètre supérieur à celui des cannes de distribution 9, ces buses étant disposées verticalement et ayant des fentes sensiblement horizontales pour l'admission de la charge fluide.

La partie supérieure de ces buses peut de préférence être profilée pour faciliter au maximum l'écoulement des grains de catalyseur.

Ces organes d'admission de la charge fluide seront tous disposés à faible distance au-dessus de la paroi du ou des entonnoirs de soutirage comme indiqué précédemment.

L'agencement selon l'invention permet d'assurer une circulation homogène du lit catalytique et de la charge fluide dans le réacteur sans freinage de l'écoulement du catalyseur par les organes de distribution, ni par la paroi du ou des entonnoirs de soutirage.

Eventuellement, il sera possible d'effectuer une injection secondaire de fluide à la base du ou des entonnoirs de soutirage afin d'empêcher le tassement du catalyseur à la partie inférieure du lit catalytique, et de supprimer totalement les risques de cokéfaction du catalyseur.

Le fluide faisant l'objet de cette injection secondaire pourra être de l'hydrogène ou une faible fraction (de l'ordre de 1 %, par exemple) de la charge convertie sortant à la partie supérieure du réacteur, éventuellement après refroidissement.

La figure 6 représente un autre dispositif d'injection, dans un réacteur 1, d'une partie au moins d'une charge fluide constituée d'au moins une phase liquide et/ou gazeuse. La charge est au moins en partie introduite par la tubulure 13 qui pénètre sensiblement horizontalement à l'intérieur du réacteur puis suit un trajet sensiblement confondu avec l'axe de l'entonnoir (un seul entonnoir 4 est dessiné sur la figure 6), jusqu'au voisinage du fond de l'entonnoir et de l'orifice 5 de soutirage du catalyseur, ladite tubulure se divisant en un faisceau de tubes ou de branches 14 qui remontent le long des parois de l'entonnoir, sensiblement parallèlement à ces parois, ces tubes étant, par exemple, percés d'orifices 15 pour l'injection de la charge. Le dispositif est ainsi constitué de plusieurs tubes 14 qui peuvent être, par exemple, perforés comme l'indique la figure 6 (avec les perforations de préférence orientées vers le bas) ou, par exemple encore, munis de fentes circulaires ou semi-circulaires, orientées vers le bas, comme l'indique la figure 6a (tube 14 et orifices 15 en forme de fentes).

La figure 6b montre le dispositif vu en coupe, par au-dessus : on distingue le réacteur 1, et les branches telles que 14, ascendantes et parallèles à certaines génératrices de l'entonnoir 4 disposées comme les baleines d'un parapluie renversé. Ces tubes, réunis ensemble au niveau de leur partie inférieure 16, sont alimentés par la tuyauterie ou tubulure 13, d'abord horizontale lorsqu'elle pénètre dans le réacteur, puis sensiblement verticale et au centre par rapport aux branches et généralement confondue avec l'axe de l'entonnoir 4 (ou de chaque entonnoir s'il y en a plusieurs).

Chacun des tubes d'injection (14 sur les figures 6 et 6b) est proche de la génératrice correspondante du cône de l'entonnoir, en laissant pourtant entre le cône et le tube 14 un espace suffisant pour permettre le libre passage des grains de catalyseur lorsqu'ils descendent le long de l'entonnoir.

Les sections des différents tubes 14 d'injection sont telles que la séparation éventuelle des phases qui constituent la charge fluide est rendue impossible par les phénomènes de turbulence.

Les perforations ou les fentes de ces tubes d'injection, ainsi qu'indiqué précédemment, sont orientées préférentiellement vers le bas de manière à éviter leur bouchage par des fragments de catalyseur, et aussi de manière à irriguer le lit catalytique de manière systématique, et en particulier jusqu'à proximité de l'entonnoir le long duquel glisse le catalyseur.

**Revendications**

1. Procédé pour soutirer des particules de catalyseur d'une zone de réaction et pour introduire dans ladite zone une charge fluide constituée d'au moins un liquide et d'un gaz riche en hydrogène, ladite zone ayant sensiblement une forme cylindrique allongée et sensiblement verticale, les particules de catalyseur étant introduites à la partie supérieure de la zone de réaction et soutirées progressivement dans la partie inférieure de la zone de réaction après avoir cheminé de haut en bas dans ladite zone de réaction, tandis que la charge fluide est introduite au moins en partie dans la partie inférieure de ladite zone de réaction et en est soutirée dans la partie supérieure après avoir cheminé de bas en haut dans la zone de réaction, procédé dans lequel les particules de catalyseur sont soutirées par l'extrémité inférieure d'au moins une zone évasée ayant la forme d'un cône renversé ou d'une pyramide renversée, c'est-à-dire d'un cône ou d'une pyramide dont le sommet est tourné vers le bas, sommet dans lequel est percé au moins une ouverture de taille nécessaire à l'évacuation des particules de catalyseur, la surface des parois de ladite zone évasée étant sensiblement continue, le procédé étant caractérisé en ce qu'une partie au moins de la charge fluide est injectée dans la partie inférieure de ladite zone de réaction par au moins une conduite principale généralement sensiblement horizontale qui se subdivise en plusieurs conduites disposées sensiblement verticalement à l'intérieur de la zone de réaction et aux extrémités inférieures desquelles est aménagé au moins un orifice par conduite, chaque orifice étant situé au-dessus desdites parois, chaque orifice étant situé à une distance desdites parois au moins égale à la taille moyenne d'une particule de catalyseur et au plus égale à environ 500 fois la taille moyenne d'une particule de catalyseur.

2. Procédé selon la revendication 1 dans lequel en outre chacun desdits orifices d'injection d'au moins une partie de la charge fluide, est situé à une distance desdites parois de la zone évasée comprise entre 4 et 10 fois la taille moyenne d'une particule de catalyseur.

3. Procédé pour soutirer des particules de catalyseur d'une zone de réaction et pour introduire dans ladite zone une charge fluide constituée d'au moins un liquide et d'un gaz riche en hydrogène, ladite zone ayant sensiblement une forme cylindrique allongée et sensiblement verticale, les particules de catalyseur étant introduites à la partie supérieure de la zone de réaction et soutirées progressivement dans la partie inférieure de la zone de réaction après avoir cheminé de haut en bas dans ladite zone de réaction, tandis que la charge fluide est introduite au moins en partie dans la partie inférieure de ladite zone de réaction et en est soutirée dans la partie supérieure après avoir cheminé de bas en haut dans la zone de réaction, procédé dans lequel les particules de catalyseur sont soutirées par l'extrémité inférieure d'au moins une zone évasée ayant la forme d'un cône renversé ou d'une pyramide renversée, c'est-à-dire d'un cône ou d'une pyramide dont le sommet est tourné vers le bas, sommet dans lequel est percé au moins une ouverture de taille nécessaire à l'évacuation des particules de catalyseur, la surface des parois de ladite zone évasée étant sensiblement continue, le procédé étant caractérisé en ce qu'une partie au moins de la charge fluide est injectée dans la partie inférieure de ladite zone de réaction par au moins une conduite principale généralement sensiblement horizontale qui ensuite se subdivise en une tubulure par enceinte évasée, ladite tubulure étant disposée sensiblement verticalement selon l'axe de chaque cône ou de chaque pyramide et se subdivisant au voisinage du sommet dudit cône ou de ladite pyramide en une pluralité de conduites sensiblement parallèles aux génératrices du cône ou aux parois de la pyramide et le long desquelles conduites sont disposés des orifices situés au-dessus desdites parois, chaque orifice étant situé à une distance desdites parois au moins égale à la taille moyenne d'une particule de catalyseur et au plus égale à environ 500 fois la taille moyenne d'une particule de catalyseur.

4. Procédé selon la revendication 3, dans lequel en outre chacun desdits orifices d'injection d'au moins une partie de la charge fluide, est situé à une distance desdites parois de la zone évasée comprise entre 4 et 10 fois la taille moyenne d'une particule de catalyseur.

5. Appareil pour effectuer le procédé selon l'une des revendications 1 et 2, comportant (voir figure 1) un réacteur 1, des moyens (2) d'introduction de catalyseur frais à la partie supérieure du réacteur, des moyens d'évacuation du catalyseur usé à la partie inférieure de ce réacteur, ces moyens d'évacuation comportant au moins un entonnoir (4) de soutirage, de forme conique ou pyramidale, dont le sommet pointe vers le bas, les parois dudit entonnoir (4) de soutirage étant dépourvues d'aspérités et de perforations, l'angle que fait l'axe de cet entonnoir avec l'une des génératrices du cône (si l'entonnoir a la forme d'un cône) ou l'une des arêtes de la pyramide (si l'entonnoir a la forme d'une pyramide), étant compris entre 10 et 80°, une ouverture (5) suffisamment grande pour évacuer le catalyseur usé hors du réacteur, étant aménagée autour dudit sommet, l'appareil comportant également des moyens (8) d'introduction de la charge fluide à la partie inférieure du réacteur et des moyens (10) d'évacuation de la charge fluide traitée à la partie supérieure du réacteur, l'appareil étant caractérisé en ce que les moyens (8) d'introduction de la charge fluide comportent une pluralité de conduits sensiblement verticaux disposés au-dessus desdites parois, l'écartement entre les conduits, pris deux à deux, étant suffisant pour ne pas freiner les particules de catalyseur, la pluralité de conduite étant alimentée par au moins une tubulure sensiblement horizontale, chaque conduit étant muni d'au moins un orifice disposé au voisinage de l'extrémité inférieure dudit conduit, chaque orifice étant aménagé au-dessus desdites parois et à une distance desdites parois au plus égale à environ 10 cm.

6. Appareil selon la revendication 5, caractérisé en ce que lesdits conduits d'introduction de la charge comportent à leur partie inférieure un embout perforé qui constitue ainsi lesdits orifices, ledit embout étant sensiblement vertical, ou sensiblement horizontal.

7. Appareil selon la revendication 6, caractérisé en ce que lesdits conduits d'introduction de la charge sont terminés au voisinage de leur extrémité inférieure par des organes de plus grand diamètre formant crépines, ces organes étant disposés verticalement et ayant des fentes horizontales pour l'admission de la charge fluide.

8. Appareil pour effectuer le procédé selon l'une des revendications 3 et 4, comportant (voir figure (6)) un réacteur (1), des moyens (2) d'introduction de catalyseur frais à la partie supérieure du réacteur, des moyens d'évacuation du catalyseur usé à la partie inférieure de ce réacteur, ces moyens d'évacuation comportant au moins un entonnoir (4) de soutirage, de forme conique ou pyramidale, dont le sommet pointe vers le bas, les parois dudit entonnoir (4) de soutirage étant dépourvues d'aspérités et de perforations, l'angle que fait l'axe de cet entonnoir avec l'une des génératrices du cône (si l'entonnoir a la forme d'un cône) ou l'une des arêtes de la pyramide (si l'entonnoir a la forme d'une pyramide), étant compris entre 10 et 80°, une ouverture (5) suffisamment grande pour évacuer le catalyseur usé hors du réacteur, étant aménagée autour dudit sommet, l'appareil comportant également des moyens (8) d'introduction de la charge fluide à la partie inférieure du réacteur et des moyens (10) d'évacuation de la charge fluide traitée à la partie supérieure du réacteur, l'appareil étant caractérisé en ce que les moyens (8) d'introduction de la charge fluide comportent au moins une tubulure qui pénètre sensiblement horizontalement à l'intérieur du réacteur puis suit un trajet sensiblement confondu avec l'axe de l'entonnoir, jusque dans le fond de cet entonnoir, ladite tubulure éclatant ensuite en un faisceau de tubes ou de branches ascendantes sensiblement parallèles aux parois de l'entonnoir, ces tubes étant percés d'orifices par lesquels est réalisée l'injection d'une partie de la charge, cesdits orifices se présentant sous la forme de perforations ou de fentes, lesdites perforations ou fentes étant orientées vers le bas, et situées à une distance desdites parois au plus égale à 10 cm.

## Claims

1. A process for withdrawing catalyst particles from a reaction zone and for introducing into said zone a fluid charge consisting of at least a liquid and a gas of high hydrogen content, said zone having substantially an elongate cylindrical shape and being substantially vertical, the catalyst particles being introduced at the upper part of the reaction zone and progressively withdrawn from the lower part of the reaction zone after having progressed downwardly through said reaction zone, while the fluid charge is introduced at least partly in the lower part of said reaction zone and is withdrawn from the upper part thereof, after having progressed upwardly through the reaction zone, process wherein the catalyst particles are withdrawn from the lower end of a flared zone having the shape of an inverted cone or an inverted pyramid, i. e. of a cone or a pyramid whose apex is overturned downwardly, said apex being provided with at least one opening of the required size for the discharge of the catalyst particles, the surface of the walls of said zone being substantially continuous, the process being characterized in that at least a portion of the fluid charge is introduced in the lower part of said reaction zone through at least a main line generally substantially horizontal which is subdivided into several lines extending substantially vertically inside the reaction zone and at the lower ends of which at least one orifice per line is provided, each orifice being located above said walls, each orifice being located at a distance from said walls at least equal to the average size of a catalyst particle and at most equal to about 500 times the average size of a catalyst particle.

2. A process according to claim 1, wherein, in addition, each of said orifices for introducing at least a portion of the fluid charge is located at a distance from said walls of the flared zone comprised between 4 and 10 times the average size of a catalyst particle.

3. A process according to claim 1 for withdrawing catalyst particles from a reaction zone and for introducing into said zone a fluid charge consisting of at least a liquid and a gas of high hydrogen content, said zone having substantially an elongate cylindrical shape and being substantially vertical, the catalyst particles being introduced at the upper part of the reaction zone and progressively withdrawn from the lower part of the reaction zone after having progressed downwardly through said reaction zone, while the fluid charge is introduced at least partly in the lower part of said reaction zone and is withdrawn from the upper part thereof, after having progressed upwardly through the reaction zone, process wherein the catalyst particles are withdrawn from the lower end of a flared zone having the shape of an inverted cone or an inverted pyramid, i. e. of a cone or a pyramid whose apex is overturned downwardly, said apex being provided with at least one opening of the required size for the discharge of the catalyst particles, the surface of the walls of said zone being substantially continuous, the process being characterized in that at least a portion of the fluid charge is introduced in the lower part of said reaction zone through at least one main line generally substantially horizontal which is then subdivided in at least one pipe per flared enclosure, said pipe extending substantially vertically along the axis of each cone or of each pyramid and being subdivided in the vicinity of the apex of said cone or of said pyramid into a plurality of pipes substantially parallel to the generatrices of the cone or to the walls of the pyramid, said orifices being provided along said pipes, each orifice being located above said walls, each orifice being located at a distance from said walls at least equal to the average size of a catalyst particle and at most equal to about 500 times the average size of a catalyst particle.

4. A process according to claim 3, wherein in addition, each of said orifices for introducing at least a portion of the fluid charge is located at a distance from said walls of the flared zone comprised between 4 and 10 times the average size of a catalyst particle.

5. An apparatus for carrying out a process according to claim 1 or claim 2 (see figure 1), comprising a reactor 1, means 2 for introducing fresh catalyst at the upper part of the reactor, means for discharging the used catalyst from the lower part of said reactor, said discharge means comprising at least one discharge funnel 4 of conic or pyramidal shape, whose apex is oriented downwardly, the walls of said discharge funnel 4 being free of roughnesses and perforations, the angle formed between the axis of said funnel and one of the cone generatrices (when the funnel has a conical shape) or one of the edges of the pyramid (when the funnel has a pyramidal shape), being comprised between 10 and 80°, an opening 5, of sufficient size for discharging the used catalyst outside from the reactor, being provided in the vicinity of said apex, the apparatus also comprising means 8 for introducing the fluid charge at the lower part of the reactor and means 10 for discharging the fluid charge treated at the upper part of the reactor, the apparatus being characterized in that the means (8) for the introduction of the fluid charge comprise a plurality of substantially vertical pipes, located above said walls, the spacing between the adjacent pipe of any pair being sufficient for avoiding the slowing down of the catalyst particles, said plurality of pipes being fed from at least one substantially horizontal pipe, each vertical pipe being provided with at least one orifice located in the vicinity of the lower end of said pipe, each orifice being located above said walls and at a distance from said walls, at most equal to about 10 cm.

6. An apparatus according to claim 5, characterized in that said pipes for introducing the charge comprise at their lower part a perforated end part whose perforations constitute said orifices, said end part being substantially vertical or substantially horizontal.

7. An apparatus according to claim 6, characterized in that said pipes for introducing the charge have an end part of larger diameter at the vicinity of their lower part, which form screened pipes, these end parts being vertical and having horizontal slots for the admission of the fluid charge.

8. An apparatus for carrying out a process according to claims 3 and 4 (see figure 6), comprising a reactor 1, means 2 for introducing fresh catalyst at the upper part of the reactor, means for discharging the used catalyst from the lower part of said reactor, said discharge means comprising at least one discharge funnel 4 of conic or pyramidal shape, whose apex is oriented downwardly, the walls of said discharge funnel 4, being free of roughnesses and perforations, the angle formed between the axis of said funnel and one of the cone generatrices (when the funnel has a conical shape) or one of the edges of the pyramid (when the funnel has a pyramidal shape), being comprised between 10 and 80°, an opening 5, of sufficient size for discharging the used catalyst outside from the reactor, being provided in the vicinity of said apex, the apparatus also comprising means 8 for introducing the fluid charge at the lower part of the reactor and means 10 for discharging the fluid charge treated at the upper part of the reactor, the apparatus being characterized in that the means (8) for introducing the fluid charge comprise at least one pipe penetrating substantially horizontally inside the reactor and then following a path substantially coinciding with the axis of the funnel, down to the bottom of said funnel, said pipe being then subdivided into a bundle of upwardly directed tubes or branches substantially parallel to the walls of the funnel, said tubes being provided with orifices wherethrough is effected the injection of a portion of the charge, said orifices consisting of perforations or slots, said perforations or slots being downwardly oriented and located at a distance from said walls at most equal to 10 cm.

**Patentansprüche**

1. Verfahren zum Abziehen der Katalysatorpartikel aus einer Reaktionszone und zum Einführen in diese Zone einer Fluidcharge, die aus wenigstens einer Flüssigkeit und einem an Wasserstoff reichen Gas besteht, wobei die Zone eine im wesentlichen zylindrische längliche und im wesentlichen vertikale Gestalt hat, wobei die Katalysatorpartikel im oberen Teil der Reaktionszone eingeführt und allmählich im unteren Teil der Reaktionszone abgezogen werden, nachdem sie von oben nach unten diese Reaktionszone durchlaufen haben, während die Fluidcharge wenigstens zum Teil in den unteren Teil dieser Reaktionszone eingeführt wird und hieraus im oberen Teil abgezogen wird, nachdem sie von unten nach oben diese Reaktionszone durchwandert hat, Verfahren, bei dem die Katalysatorpartikel über das untere Ende wenigstens einer aufgeweiteten Zone abgezogen werden, die die Gestalt eines umgekehrten Konus oder Kegels oder einer umgekehrten Pyramide hat, d. h. eines Konus oder eine Pyramide, deren Spitze nach unten gewendet ist und in deren Spitze wenigstens eine Öffnung einer Abmessung gebohrt ist, die notwendig zum Abziehen der Katalysatorpartikel ist, wobei die Oberfläche der Wandungen dieser aufgeweiteten Zone im wesentlichen kontinuierlich ist, dadurch gekennzeichnet, daß wenigstens ein Teil der Fluidcharge in den unteren Teil dieser Reaktionszone über wenigstens eine im wesentlichen horizontale Hauptleitung eingeführt wird, die sich in mehrere Leitungen verteilt, die im wesentlichen vertikal im Innern der Reaktionszone angeordnet sind und an deren unteren Enden wenigstens eine Öffnung pro Leitung ausgebildet ist, wobei jede Öffnung oberhalb dieser Wandungen angeordnet ist, und jede Öffnung unter einem Abstand von diesen Wandungen sich befindet, der wenigstens gleich der mittleren Abmessung einer Katalysatorpartikel und höchstens gleich etwa dem 500-fachen der mittleren Abmessung einer Katalysatorpartikel ist.

2. Verfahren nach Anspruch 1, dadurch gekennzeichnet, daß im übrigen jede dieser Einführungsöffnungen für wenigstens einen Teil der Fluidcharge sich unter einem Abstand von diesen Wandungen der aufgeweiteten Zone befindet, der zwischen dem 4 und 10-fachen der mittleren Abmessung einer Katalysatorpartikel ausmacht.

3. Verfahren zum Abziehen der Katalysatorpartikel aus einer Reaktionszone und zum Einführen in diese Zone einer Fluidcharge, die aus wenigstens einer Flüssigkeit und einem an Wasserstoff reichen Gas besteht, wobei diese Zone im wesentlichen eine zylindrische längliche und im wesentlichen vertikale Gestalt hat, wobei die Katalysatorpartikel im oberen Teil der Reaktionszone eingeführt und allmählich im unteren Teil der Reaktionszone abgezogen werden, nachdem sie diese Reaktionszone von oben nach unten durchwandert haben, während die Fluidcharge wenigstens zum Teil in den unteren Teil der Reaktionszone eingeführt und im oberen Teil abgezogen wird, nachdem sie die Reaktionszone von unten nach oben durchlaufen hat, Verfahren bei dem die Katalysatorpartikel über das untere Ende wenigstens einer aufgeweiteten Zone abgezogen werden, die die Gestalt eines umgekehrten Konus oder einer umgekehrten Pyramide hat, d. h. eines Konus oder einer Pyramide, deren Spitze nach unten weist und wobei in diese Spitze wenigstens eine Öffnung von einer Abmessung gebohrt ist, die notwendig zum Abziehen der Katalysatorpartikel ist, wobei die Oberfläche der Wandungen dieser aufgeweiteten Zone im wesentlichen kontinuierlich ist, dadurch gekennzeichnet, daß wenigstens ein Teil der Fluidcharge in den unteren Teil der Reaktionszone über wenigstens eine Hauptleitung, die im wesentlichen horizontal verläuft, eingeführt wird und die anschließend sich in einen Rohrstutzen pro aufgeweiteten Raum unterteilt, wobei der Stutzen im wesentlichen vertikal längs der Achse jedes Konus oder jeder Pyramide angeordnet ist und sich benachbart der Spitze dieses Konus oder der Pyramide in eine Vielzahl von Leitungen unterteilt, die im wesentlichen parallel zu den Erzeugenden des Konus oder den Wandungen der Pyramide sind und wobei längs dieser Leitungen Öffnungen oberhalb dieser Wandungen angeordnet sind und daß jede Öffnung unter einem Abstand von diesen Wandungen wenigstens gleich der mitleren Abmessung einer Katalysatorpartikel und höchstens gleich etwa dem 500-fachen der mittleren Abmessung einer Katalysatorpartikel angeordnet ist.

4. Verfahren nach Anspruch 3, dadurch gekennzeichnet, daß im übrigen jede der Einführöffnungen für wenigstens einen Teil der Fluidcharge sich unter einem Abstand von diesen Wandungen der aufgeweiteten Zone befindet, der zwischen dem 4 und 10-fachen der mittleren Abmessung einer Katalysatorpartikel beträgt.

5. Vorrichtung zur Durchführung des Verfahrens nach einem der Ansprüche 1 und 2 mit (siehe Fig. 1) einem Reaktor (1), Einrichtungen (2) zum Einführen frischen Katalysators im oberen Teil des Reaktors, Einrichtungen zum Abziehen des verbrauchten Katalysators am unteren Teil dieses Reaktors, wobei diese Abzugseinrichtungen wenigstens einen Abzugstrichter (4) konischer oder pyramidenförmiger Gestalt aufweisen, dessen Spitze nach unten weist, wobei die Wandungen dieses Abzugstrichters (4) frei von Unebenheiten und Perforationen sind und der Winkel, den die Achse des Trichters mit einer der Erzeugenden des Konus oder Kegels (wenn der Trichter die Form eines Konus aufweist) oder mit einer der Kanten der Pyramide (wenn der Trichter die Form einer Pyramide hat) aufweist, zwischen 10 und 80° liegt, wobei eine genügend große Öffnung (5) zum Abführen des verbrauchten Katalysators aus dem Reaktor um diese Spitze ausgebildet ist und die Vorrichtung auch Einrichtungen (8) zum Einführen der fluiden Charge im unteren Teil des Reaktors sowie Einrichtungen (10) zum Abziehen der fluiden behandelten Charge im oberen Teil des Reaktors aufweist, wobei die Vorrichtung dadurch gekennzeichnet ist, daß die Einrichtungen (8) zum Einführen der fluiden Charge eine Vielzahl von im wesentlichen vertikalen oberhalb dieser Wandungen angeordneten Leitungen aufweisen, wobei der Abstand zwischen diesen Leitungen zu zwei und zwei genommen, ausreichend ist, um die Partikel des Katalysators nicht abzubremsen, wobei die Vielzahl von Leitungen über wenigstens einen im wesentlichen horizontalen Stutzen gespeist ist und jede Leitung mit wenigstens einer Öffnung versehen ist, die benachbart dem unteren Ende der Leitung angeordnet ist, wobei jede Öffnung oberhalb dieser Wandungen und unter einer Entfernung zu diesen Wandungen, die höchstens gleich etwa 10 cm ist, ausgebildet ist.

6. Vorrichtung nach Anspruch 5, dadurch gekennzeichnet, daß diese Einführungsleitungen für die Charge an ihrem unteren Teil einen perforierten Stutzen umfassen, der so diese Öffnungen bildet, wobei der Stutzen im wesentlichen vertikal oder im wesentlichen horizontal ist.

7. Vorrichtung nach Anspruch 6, dadurch gekennzeichnet, daß diese Einführungsleitungen für die Charge benachbart ihrem unteren Ende in Organen größeren Durchmessers, welche durchlöcherte Köpfe bilden, enden, wobei diese Organe vertikal angeordnet sind und horizontale Schlitze für den Einlaß der Fluidcharge haben.

8. Vorrichtung zum Durchführen des Verfahrens nach einem der Ansprüche 3 und 4 mit (siehe Fig. 4) einem Reaktor (1), Einrichtungen (2) zum Einführen frischen Katalysators im oberen Teil des Reaktors, Einrichtungen zum Abziehen des verbrauchten Katalysators im unteren Teil dieses Reaktors, wobei diese Abzugseinrichtungen wenigstens einen Abzugstrichter (4) konischer oder pyramidenförmiger Gestalt umfassen, dessen Spitze nach unten weist, wobei die Wandungen dieses Abzugstrichters (4) frei von Unebenheiten und Perforationen sind und der Winkel, den die Achse dieses Trichters mit einer der Erzeugenden des Kegels bildet (wenn der Trichter die Form eines Kegels hat) oder mit einer der Kanten der Pyramide (wenn der Trichter die Form einer Pyramide hat) zwischen 10 und 80° liegt und eine ausreichend große Öffnung (5) zum Abziehen des verbrauchten Katalysators aus dem Reaktor um diese Spitze oder diesen Kopf vorgesehen ist, wobei die Vorrichtung auch Mittel (8) zum Einführen der Fluidcharge im unteren Teil des Reaktors sowie Einrichtungen (10) zum Abziehen der behandelten Fluidcharge im oberen Teil des Reaktors aufweist, wobei die Vorrichtung dadurch gekennzeichnet ist, daß die Einrichtungen (8) zum Einführen der Fluidcharge wenigstens einen Stutzen aufweisen, der im wesentlichen horizontal in das Innere des Reaktors eindringt und dann bis in den Boden dieses Trichters einem Weg, der im wesentlichen mit der Achse des Trichters zusammenfällt, folgt, wobei der Stutzen sich dann in ein Bündel von Rohren und steigenden Zweigleitungen auffächert, die im wesentlichen parallel zu den Wandungen des Trichters verlaufen, wobei diese Rohre von Öffnungen durchbohrt sind, über die das Einführen eines Teils der Charge herbeigeführt wird, wobei diese Öffnungen in Form von Perforationen oder Schlitzen vorliegen und die Perforationen oder Schlitze nach unten orientiert sind und unter einem Abstand von diesen Wandungen, der höchstens 10 cm beträgt, angeordnet sind.

FIG.1

FIG.1A

FIG.2

FIG.6

FIG.2A

FIG.6A

FIG.3

FIG.4

FIG.6B

FIG.5

2